# EUROPEAN PATENT APPLICATION

(11) **EP 4 603 885 A1**
(43) Date of publication of application: **20.08.2025**
(21) Application number: 23893344.4
(22) Date of filing: 05.09.2023
(51) Int. Cl.: G02B 6/44

(54) **CONVERTER, CABLE ASSEMBLY, AND FIBER OPTIC BOX**

(30) Priority: 23.11.2022 CN 202211471968
(71) Applicant: Huawei Technologies Co., Ltd., Shenzhen, Guangdong 518129 (CN)
(72) Inventor: TANG, Feng, Shenzhen, Guangdong 518129 (CN); XIONG, Wei, Shenzhen, Guangdong 518129 (CN); LI, Yuanyuan, Shenzhen, Guangdong 518129 (CN)
(74) Representative: Körber, Martin Hans
(86) International application number: PCT/CN2023/116948
(87) International publication number: WO 2024/109251

(57) **Abstract**

This application provides a converter, a cable assembly, and a fiber management tray, relates to the field of communication technologies, and resolves a problem of incompatibility between different types of optical fiber connectors. The converter provided in this application includes a cylinder. The cylinder has a first port and a second port, and a channel that runs through the first port and the second port. The first port is configured to be connected to a first optical fiber connector, and the second port is configured to be connected to a second optical fiber connector. The first optical fiber connector has a first abutting surface and a second abutting surface facing away from each other. The cylinder has a third abutting surface and a first elastic snap. The third abutting surface is configured to abut against the first abutting surface. The first elastic snap is configured to abut against the second abutting surface. In this way, relative displacement between the converter and the first optical fiber connector in an insertion direction is prevented. Connection between the first optical fiber connector and the second optical fiber connector that are of different types can be achieved through the converter provided in this application.

## Description

### CROSS-REFERENCE TO RELATED APPLICATIONS

This application claims priority to Chinese Patent Application No. 202211471968.3, filed with the China National Intellectual Property Administration on November 23, 2022 and entitled "CONVERTER, CABLE ASSEMBLY, AND FIBER MANAGEMENT TRAY", which is incorporated herein by reference in its entirety.

### TECHNICAL FIELD

This application relates to the field of communication technologies, and in particular, to a converter, a cable assembly, and a fiber management tray.

### BACKGROUND

Currently, in construction of global fiber to the home (fiber to the home, FTTH), a pre-connected product is increasingly used because of advantages of convenient deployment and reduced construction difficulty. The pre-connected product may include a pre-connected optical fiber, a pre-connected box, and the like. For example, in a pre-connected optical fiber, an optical fiber connector may be pre-mounted at an end of the optical fiber. During practical use, the optical fiber connector may be connected to another interface or connector, thereby improving the convenience of deployment and use.

Currently, there are many different types of pre-connected products on the market. The interface shapes, sizes, and operation modes of different manufacturers are different, so that optical fiber connectors of different manufacturers may be incompatible. If replacing a pre-connected optical fiber or a pre-connected box, an operator may face problems such as high replacement costs and complicated operations. Therefore, how to improve adaptability between different optical fiber connectors becomes a technical problem to be urgently resolved.

### SUMMARY

This application provides a converter, a cable assembly, and a fiber management tray that can adaptively convert a type of an optical fiber connector.

According to a first aspect, this application provides a converter, including a cylinder. The cylinder has a first port and a second port. The cylinder has a channel that runs through the first port and the second port. The first port is configured to be connected to a first optical fiber connector, and the second port is configured to be connected to a second optical fiber connector. During a practical application, the first optical fiber connector and the second optical fiber connector may be interconnected in the channel. The first optical fiber connector has a first abutting surface provided in an insertion direction, and a second abutting surface provided against the insertion direction. The cylinder has a third abutting surface and a first elastic snap. The third abutting surface is configured to abut against the first abutting surface. The first elastic snap is configured to abut against the second abutting surface. In this way, relative displacement between the converter and the first optical fiber connector in an insertion direction is prevented. In addition, during a practical application, the converter, the first optical fiber connector, and the second optical fiber connector may be used or sold separately. Alternatively, the second optical fiber connector may be included in the converter, that is, the converter and the second optical fiber connector may be used or sold in combination. Certainly, the first optical fiber connector may be included in the converter, that is, the converter and the first optical fiber connector may be used or sold in combination.

In the converter provided in this application, when types of the first optical fiber connector and the second optical fiber connector are different and cannot be effectively connected, the first optical fiber connector and the second optical fiber connector may be connected through the converter. In a process of inserting the first optical fiber connector into the converter, after the first abutting surface abuts against the third abutting surface, the first optical fiber connector can be prevented from continuously moving in the insertion direction relative to the converter. In addition, after the first abutting surface abuts against the third abutting surface, the first elastic snap abuts against the second abutting surface, so that the first optical fiber connector can be prevented from moving against the insertion direction relative to the converter, thereby achieving a mechanical connection between the converter and the first optical fiber connector. In addition, the converter may provide the second port, and a type of the second port is the same as the type of the second optical fiber connector. Therefore, good adaptation between the converter and the second optical fiber connector can be achieved. Finally, an effective connection between the first optical fiber connector and the second optical fiber connector is achieved.

In an example, a limiting protrusion may be provided in the channel of the cylinder. An outer peripheral surface of the first optical fiber connector is provided with a limiting slot extending in the insertion direction, an end of the limiting slot in the insertion direction is an open end, and an end of the limiting slot against the insertion direction is provided with the first abutting surface. The limiting protrusion is configured to be inserted into the limiting slot, to prevent relative rotation between the converter and the first optical fiber connector, thereby improving the stability of connection between the converter and the first optical fiber connector.

In an example, a sealing surface is provided in the channel. A sealing ring is sleeved on the outer peripheral surface of the first optical fiber connector. The sealing surface is airtightly attached to the sealing ring, to ensure the sealing performance of connection between the converter and the first optical fiber connector.

In an example, the converter further includes a locking ring. The locking ring may be movably sleeved on a periphery of the cylinder, and is configured to prevent the first elastic snap from being elastically deformed, thereby preventing the first elastic snap from being detached from the second abutting surface, and preventing the converter from being detached from the first optical fiber connector.

During specific setting, the locking ring and the cylinder may be fixed to each other in a threaded connection manner. For example, an outer peripheral surface of the cylinder may be provided with an outer thread, an inner wall of the locking ring may be provided with an inner thread. The locking ring is connected to the cylinder by the threads, thereby ensuring the stability of connection between the locking ring and the cylinder.

In an example, the converter may further include a second elastic snap. An outer peripheral surface of the second optical fiber connector is provided with a first slot. The second elastic snap is configured to be snap-fitted to the first slot.

In an example, the converter may further include a first sliding sleeve. The first sliding sleeve is sleeved on a periphery of the cylinder and is capable of sliding relative to the cylinder. When located in a first sliding position, the first sliding sleeve is configured to prevent the second elastic snap from being elastically deformed, thereby preventing the second elastic snap from being detached from the first slot. When the first sliding sleeve is located in a second sliding position, the second elastic snap may be elastically deformed, so that the second elastic snap can be allowed to be snap-fitted to or detached from the first slot.

In an example, the converter may further include a spring. The spring is connected to the first sliding sleeve and the cylinder, and is configured to enable the first sliding sleeve to slide to the first sliding position, thereby ensuring the reliability of connection between the converter and the second optical fiber connector.

In an example, a periphery of the cylinder is provided with positioning columns. The second optical fiber connector is provided with positioning slots. The positioning columns may be inserted into the positioning slots.

During a specific use, a corresponding converter may be selected based on specific types of the first optical fiber connector and the second optical fiber connector, and an effective connection between the first optical fiber connector and the second optical fiber connector may be achieved through the converter.

For example, according to a second aspect, this application provides another converter. The converter may include a cylinder. The cylinder has a first port and a second port. The cylinder has a channel that runs through the first port and the second port. The first port is configured to be connected to a first optical fiber connector, and the second port is configured to be connected to a second optical fiber connector. The first optical fiber connector and the second optical fiber connector may be interconnected in the channel. The cylinder is provided with a third elastic snap. An outer peripheral surface of the first optical fiber connector is provided with a second slot. The third elastic snap is snap-fitted to the second slot. The first optical fiber connector is provided with a second sliding sleeve, and when the second sliding sleeve is located in a first sliding position, the second sliding sleeve is configured to prevent the third elastic snap from being elastically deformed. When the second sliding sleeve is located in a second sliding position, the third elastic snap may be elastically deformed. In addition, during a practical application, the converter, the first optical fiber connector, and the second optical fiber connector may be used or sold separately. Alternatively, the second optical fiber connector may be included in the converter, that is, the converter and the second optical fiber connector may be used or sold in combination. Certainly, the first optical fiber connector may be included in the converter, that is, the converter and the first optical fiber connector may be used or sold in combination.

In an example, a sealing surface is provided in the channel. A sealing ring is sleeved on the outer peripheral surface of the first optical fiber connector. The sealing surface is airtightly attached to the sealing ring, to ensure the sealing performance of connection between the converter and the first optical fiber connector.

In an example, the converter may further include a second elastic snap. An outer peripheral surface of the second optical fiber connector is provided with a first slot. The second elastic snap is configured to be snap-fitted to the first slot.

In an example, the converter may further include a first sliding sleeve. The first sliding sleeve is sleeved on a periphery of the cylinder and is capable of sliding relative to the cylinder. When located in a first sliding position, the first sliding sleeve is configured to prevent the second elastic snap from being elastically deformed, thereby preventing the second elastic snap from being detached from the first slot. When the first sliding sleeve is located in a second sliding position, the second elastic snap may be elastically deformed, so that the second elastic snap can be allowed to be snap-fitted to or detached from the first slot.

In an example, the converter may further include a spring. The spring is connected to the first sliding sleeve and the cylinder, and is configured to enable the first sliding sleeve to slide to the first sliding position, thereby ensuring the reliability of connection between the converter and the second optical fiber connector.

According to a third aspect, this application further provides a cable assembly, including an optical fiber assembly and any one of the foregoing converters. The optical fiber assembly includes an optical fiber and a first optical fiber connector provided at one end of the optical fiber. The first port is connected to the first optical fiber connector. During a practical application, a corresponding converter may be selected based on specific types of the first optical fiber connector and another optical fiber connector or interface. In this way, adaptability between the first optical fiber connector and the another optical fiber connector or interfaces can be ensured, and the first optical fiber connector can be used in more scenarios.

According to a fourth aspect, this application further provides a fiber management tray, including a tray body, a first optical fiber connector, and any one of the foregoing converters. The first optical fiber connector is fixed to the tray body, and the first port of the converter is connected to the first optical fiber connector. During a practical application, a corresponding converter may be selected based on specific types of the first optical fiber connector and another optical fiber connector or interface. In this way, adaptability between the first optical fiber connector and the another optical fiber connector or interfaces can be ensured, and the first optical fiber connector can be used in more scenarios.

### BRIEF DESCRIPTION OF DRAWINGS

FIG. 1 is a schematic diagram of an application scenario of a converter according to an embodiment of this application;
FIG. 2 is a schematic diagram of a three-dimensional structure of a first optical fiber connector according to an embodiment of this application;
FIG. 3 is a schematic diagram of a three-dimensional structure of a converter connected to a first optical fiber connector according to an embodiment of this application;
FIG. 4 is a schematic diagram of a three-dimensional structure of a converter according to an embodiment of this application;
FIG. 5 is a side view of a converter connected to a first optical fiber connector according to an embodiment of this application;
FIG. 6 is a schematic diagram of an exploded structure of a converter according to an embodiment of this application;
FIG. 7 is a schematic diagram of a cross-sectional structure of a converter connected to a first optical fiber connector according to an embodiment of this application;
FIG. 8 is a simplified schematic diagram of a structure of a first optical fiber connector and a second optical fiber connector according to an embodiment of this application;
FIG. 9 is a simplified schematic diagram of a structure of another first optical fiber connector and another second optical fiber connector according to an embodiment of this application;
FIG. 10 is a schematic diagram of a three-dimensional structure of another converter according to an embodiment of this application;
FIG. 11 is a schematic diagram of a three-dimensional structure of another converter connected to a first optical fiber connector according to an embodiment of this application;
FIG. 12 is a schematic diagram of a three-dimensional structure of another converter according to an embodiment of this application;
FIG. 13 is a schematic diagram of an exploded structure of another converter according to an embodiment of this application;
FIG. 14 is a schematic diagram of a cross-sectional structure of another converter connected to a first optical fiber connector according to an embodiment of this application;
FIG. 15 is a schematic diagram of a three-dimensional structure of another first optical fiber connector in a state according to an embodiment of this application;
FIG. 16 is a schematic diagram of a three-dimensional structure of another first optical fiber connector in another state according to an embodiment of this application;
FIG. 17 is a schematic diagram of an exploded structure of another converter according to an embodiment of this application;
FIG. 18 is a schematic diagram of a cross-sectional structure of another converter according to an embodiment of this application;
FIG. 19 is a schematic diagram of a cross-sectional structure of another converter connected to a first optical fiber connector according to an embodiment of this application;
FIG. 20 is a schematic diagram of a three-dimensional structure of another converter according to an embodiment of this application;
FIG. 21 is a schematic diagram of an exploded structure of another converter according to an embodiment of this application;
FIG. 22 is a schematic diagram of a cross-sectional structure of another converter connected to a first optical fiber connector according to an embodiment of this application;
FIG. 23 is a schematic diagram of a three-dimensional structure of another converter according to an embodiment of this application;
FIG. 24 is a schematic diagram of a three-dimensional structure of another converter connected to a first optical fiber connector according to an embodiment of this application; and
FIG. 25 is a schematic diagram of a fiber management tray according to an embodiment of this application.

### DESCRIPTION OF EMBODIMENTS

To make the objectives, technical solutions, and advantages of this application clearer, the following further describes this application in detail with reference to the accompanying drawings.

To facilitate understanding of the converter provided in embodiments of this application, the following first describes an application scenario of the converter.

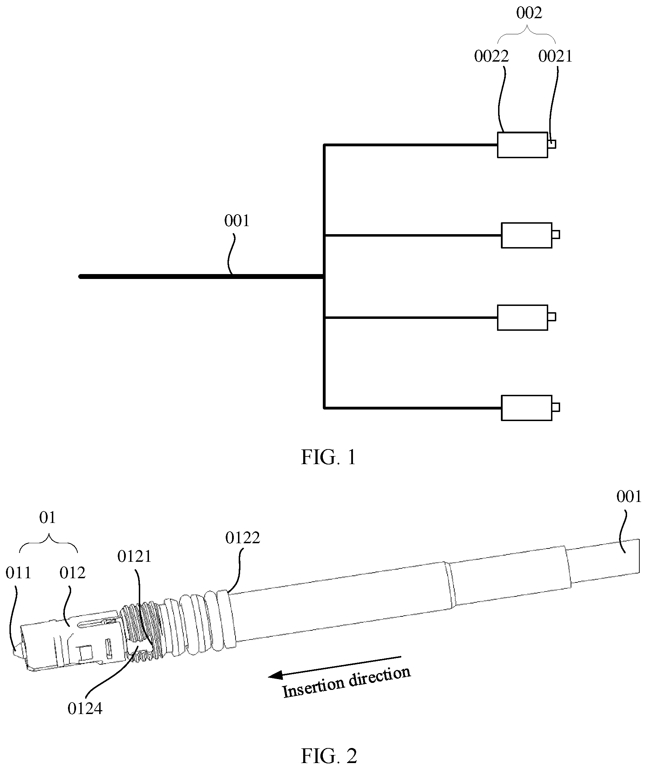

As shown in FIG. 1, in a fiber to the home (fiber to the home, FTTH) scenario, an optical fiber 001 is generally routed to a location such as a residential area equipment room or a household entrance according to a cabling design. During a practical application, optical fiber connectors 002 are generally mounted at an end of the optical fiber 001, thereby achieve connection between the optical fiber 001 and a communication device. Each optical fiber connector 002 generally includes an optical fiber ferrule 0021 and a housing 0022 located on a periphery of the optical fiber ferrule 0021. When two optical fiber connectors 002 that are adapted to each other are interconnected, optical fiber ferrules 0021 may be configured to achieve an optical signal connection, and housings 0022 may be configured to achieve a mechanical connection between the two optical fiber connectors 002, to ensure the stability of connection between the two optical fiber connectors 002. Currently, many different manufacturers may manufacture the optical fiber connectors 002 or interfaces. In addition, in different manufacturers, the structures of the housings 0022 are generally different. As a result, the optical fiber connectors 002 manufactured by different manufacturers cannot be effectively compatible. For example, connection structures of housings 0022 of different optical fiber connectors 002 are different, so that an effective mechanical connection cannot be achieved between two optical fiber connectors 002 when the two optical fiber connectors 002 are interconnected.

Therefore, embodiments of this application provide a converter. The converter may be configured to achieve an effective connection between different types of optical fiber connectors.

To make the objectives, technical solutions, and advantages of this application clearer, the following further describes this application in detail with reference to the accompanying drawings and specific embodiments.

Terms used in the following embodiments are merely intended to describe specific embodiments, and are not intended to limit this application. Terms "one", "a", and "this" of singular forms used in this specification and the appended claims of this application are also intended to include a form like "one or more", unless otherwise specified in the context clearly. It may be further understood that, in the following embodiments of this application, "at least one" means one, two, or more.

Reference to "an embodiment" or the like described in this specification means that one or more embodiments of this application include a particular feature, structure, or characteristic described in combination with the embodiment. Therefore, in this specification, statements, such as "in an embodiment", "in some embodiments", and "in other embodiments", that appear at different places do not necessarily mean referring to a same embodiment, instead, the statements mean referring to "one or more but not all of embodiments", unless otherwise specifically emphasized in other ways. Terms "include", "have", and variants of the terms all mean "include but are not limited to", unless otherwise specifically emphasized in other ways.

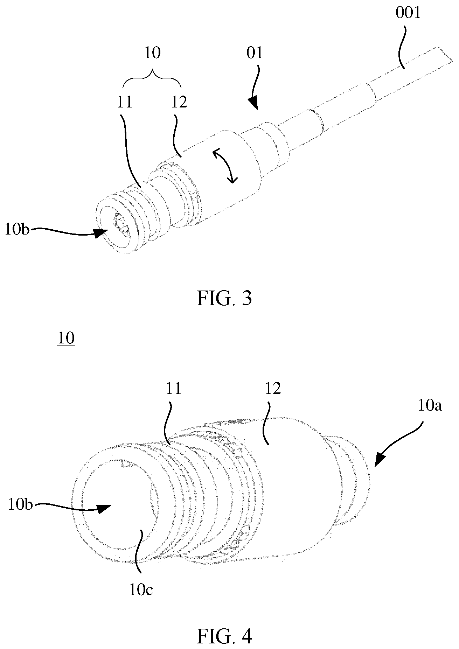

As shown in FIG. 2, in an example provided in this application, a first optical fiber connector 01 is mounted at one end of the optical fiber 001. In addition, as shown in FIG. 3, the converter 10 provided in this embodiment of this application may be mounted at one end of the first optical fiber connector 01. When the first optical fiber connector 01 and another type of optical fiber connector (not shown in FIG. 3) are interconnected, the another type of optical fiber connector may be connected to the converter 10. The interconnection between first optical fiber structure 01 and the another type of optical fiber connector may be achieved through the converter 10.

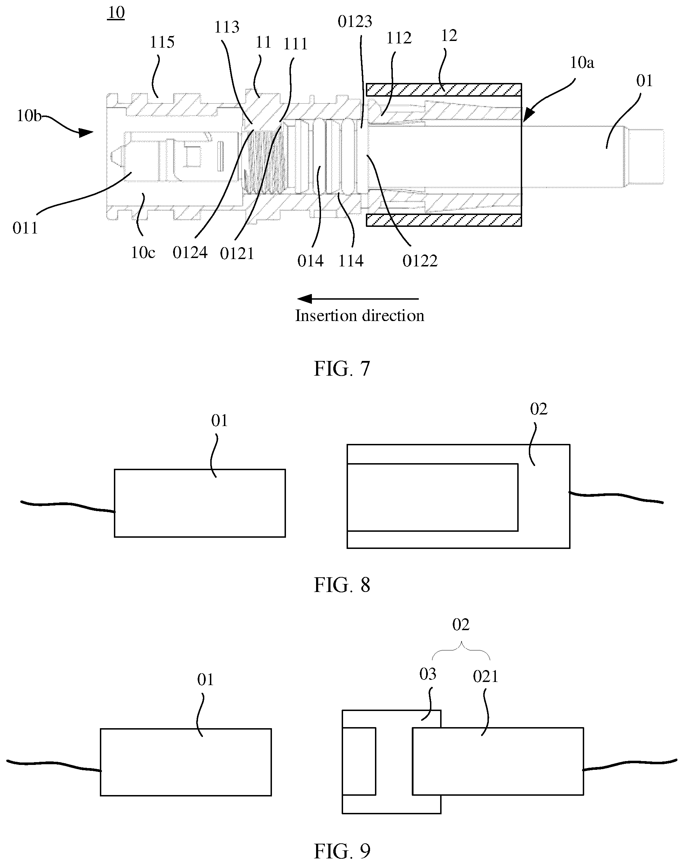

As shown in FIG. 3 to FIG. 7, in the example provided in this application, a converter 10 may include a cylinder 11. The cylinder 11 has a first port 10a and a second port 10b. As shown in FIG. 7, the cylinder 11 has a channel 10c that runs through the first port 10a with the second port 10b. The first port 10a is configured to be connected to the first optical fiber connector 01, the second port 10b is configured to be connected to a second optical fiber connector (not shown), and the first optical fiber connector 01 and the second optical fiber connector may be interconnected in the channel 10c, thereby achieving optical signal connection between the first optical fiber connector 01 and the second optical fiber connector.

The first optical fiber connector 01 includes an optical fiber ferrule 011 and a housing 012 located on a periphery of the optical fiber ferrule 011. In addition, the first optical fiber connector 01 may be inserted into the converter 10 in an insertion direction. An outer surface of the housing 012 has a first abutting surface 0121 provided in the insertion direction and a second abutting surface 0122 provided against the insertion direction. The cylinder 11 of the converter 10 has a third abutting surface 111 and a first elastic snap 112. The third abutting surface 111 is configured to abut against the first abutting surface 0121, and the first elastic snap 112 is configured to abut against the second abutting surface 0122, to prevent relative displacement between the converter 10 and the first optical fiber connector 01 in the insertion direction, thereby achieving a mechanical connection between the converter 10 and the first optical fiber connector 01. The insertion direction is a direction in which the first optical fiber connector 01 moves relative to the converter 10 when the first optical fiber connector 01 and the converter 10 are interconnected.

In the converter 10 provided in this application, when types of the first optical fiber connector 01 and the second optical fiber connector are different and cannot be effectively connected, the first optical fiber connector 01 and the second optical fiber connector may be connected through the converter 10. In a process of inserting the first optical fiber connector 01 into the converter 10, after the first abutting surface 0121 abuts against the third abutting surface 111, the first optical fiber connector 01 can be prevented from continuously moving in the insertion direction relative to the converter 10. In addition, after the first abutting surface 0121 abuts against the third abutting surface 111, the first elastic snap 112 abuts against the second abutting surface 0122, so that the first optical fiber connector 01 can be prevented from moving against the insertion direction relative to the converter 10. In other words, a mechanical connection between the converter 10 and the first optical fiber connector 01 may be achieved through the first abutting surface 0121, the third abutting surface 111, the second abutting surface 0122, and the first elastic snap 112, to ensure the stability of connection between the converter 10 and the first optical fiber connector 01. In addition, the converter 10 may provide a second port 10b, and a type of the second port 10b is the same as the type of the second optical fiber connector. Therefore, good adaptation between the converter 10 and the second optical fiber connector can be achieved. Finally, an effective connection between the first optical fiber connector 01 and the second optical fiber connector is achieved.

In summary, the converter 10 provided in this embodiment of this application may be applied to the first optical fiber connector 01 having the first abutting surface 0121 and the second abutting surface 0122, and can achieve a good connection to the first optical fiber connector 01. In this way, connection applicability of the first optical fiber connector 01 is improved, so that the first optical fiber connector 01 can be effectively connected to different types of second optical fiber connectors.

It may be noted that the foregoing first optical fiber connector 01 and the second optical fiber connector are two different types of optical fiber connectors. Therefore, an effective connection cannot be formed between the first optical fiber connector 01 and the second optical fiber connector.

Alternatively, it may be understood that when the first optical fiber connector 01 and the second optical fiber connector are optical fiber connectors of a same type, the first optical fiber connector 01 and the second optical fiber connector may be directly connected. In other words, without the use of another auxiliary connector, all optical fiber connectors that can be effectively mechanically connected and in signal connection may be considered as optical fiber connectors of the same type.

For example, as shown in FIG. 8, in a case that types of the first optical fiber connector 01 and the second optical fiber connector 02 are the same, the first optical fiber connector 01 may be a male connector, the second optical fiber connector 02 is a female connector of the same type as the first optical fiber connector 01. The first optical fiber connector 01 and the second optical fiber connector 02 may be directly connected.

Alternatively, as shown in FIG. 9, in a case that types of the first optical fiber connector 01 and the second optical fiber connector 02 are the same, the first optical fiber connector 01 may be a male connector, the second optical fiber connector 02 may be a component including an intermediate connector 03 and a male connector 021. The first optical fiber connector 01 may be connected to the intermediate connector 03 in the second optical fiber connector 02. Certainly, during a practical application, the first optical fiber connector 01 may also be a component including the intermediate connector 03 and the male connector. Details are not described herein. In addition, in another embodiment, the first optical fiber connector 01 or the second optical fiber connector 02 may also be an interface in a communication device. A structure form and an application location of the first optical fiber connector 01 and the second optical fiber connector 02 are not limited in this application.

During specific setting, the converter 10 may have various structure types.

For example, as shown in FIG. 7, in an example provided in this application, the converter 10 includes the cylinder 11 and a locking ring 12 provided on a periphery of the cylinder 11. Specifically, the cylinder 11 is in a cylindrical shape with two ends that are communicated with each other, and the first elastic snap 112 is located in a cylinder wall of the cylinder 11, and may be elastically deformed in a radial direction. The locking ring 12 may rotate circumferentially relative to the cylinder 11, and the locking ring 12 covers the first elastic snap 112. In addition, when the locking ring 12 is located in a first rotation position, an inner wall of the locking ring 12 may abut against the first elastic snap 112, to prevent the first elastic snap 112 from being elastically deformed outwards. In this way, the first elastic snap 112 and the second abutting surface 0122 can be in abut against each other, and thus, the cylinder 11 can be prevented from being detached from the first optical fiber connector 01. In addition, when the locking ring 12 is located in a second rotation position, there is a relatively large gap between the inner wall of the locking ring 12 and the first elastic snap 112, so that the first elastic snap 112 can be elastically deformed outwards, thereby facilitating assembly and disassembly between the cylinder 11 and the first optical fiber connector 01.

For example, when the converter 10 and the first optical fiber connector 01 are interconnected, the locking ring 12 may be first rotated to the second rotation position. In an interconnection process, when a shaft shoulder 0123 of the first optical fiber connector 01 passes through the first elastic snap 112, an abutting force is applied to the first elastic snap 112, so that the first elastic snap 112 is elastically deformed outwards. After the shaft shoulder 0123 passes through the first elastic snap 112, the first abutting surface 0121 abuts against the third abutting surface 111, so that the first optical fiber connector 01 can be prevented from continuously moving in the insertion direction. In addition, under an elastic force of the first elastic snap 112, the first elastic snap 112 can be restored to a state before elastic deformation, thereby abutting against the second abutting surface 0122.

Finally, the locking ring 12 is rotated to the first rotation position, so that the inner wall of the locking ring 12 abuts against the first elastic snap 112, to prevent the first elastic snap 112 from being elastically deformed outwards, thereby ensuring the stability of connection between the converter 10 and the first optical fiber connector 01.

It may be noted that the foregoing preventing the first elastic snap 112 from being elastically deformed is not absolute. In practical situation, there may be a specific gap between the first elastic snap 112 and the locking ring 12, allowing for slight elastic deformation of the first elastic snap 112. However, the slight deformation does not cause the first elastic snap 112 to be detached from the second abutting surface 0122.

Certainly, in another example, the converter 10 further includes a torsion spring (not shown), and the torsion spring may be connected to the cylinder 11 and the locking ring 12. The torsion spring may enable the locking ring 12 to be located in the first rotation position through an elastic force of the torsion spring, so that the stability of connection between the converter 10 and the first optical fiber connector 01 can be improved.

It may be understood that the foregoing first rotation position and the foregoing second rotation position may be two different specific positions, or may be two different range intervals.

In addition, during setting of the first elastic snap 112, a quantity of the first elastic snap 112 may be one, two, three, or more. When there are a plurality of first elastic snaps 112, the plurality of first elastic snaps 112 may be evenly distributed around an axis of the cylinder 11. During a practical application, a quantity, a position, and a structural shape of the first elastic snap 112 may be flexibly configured according to a practical requirement. Details are not described herein.

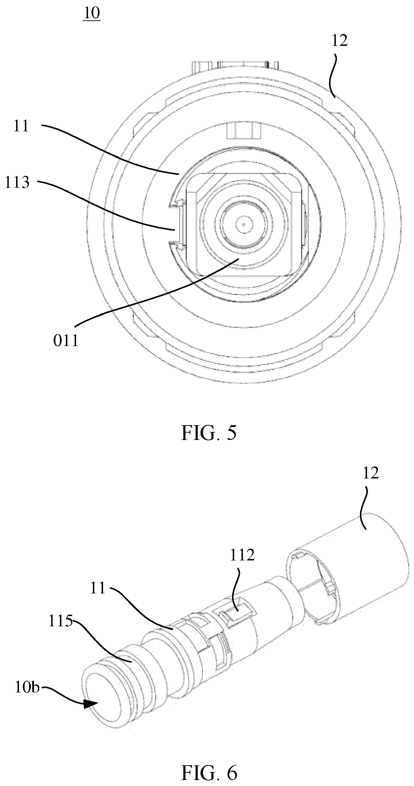

In addition, as shown in FIG. 5 and FIG. 7, in an example provided in this application, a limiting protrusion 113 is provided in the channel 10c of the converter 10. The outer peripheral surface of the first optical fiber connector 01 is provided with a limiting slot 0124 extending in the insertion direction, and the end of the limiting slot 0124 in the insertion direction is an open end (for example, a left end in FIG. 7). After the converter 10 is inserted into the first optical fiber connector 01, the limiting protrusion 113 may be inserted into the limiting slot 0124, to prevent relative rotation between the converter 10 and the first optical fiber connector 01, thereby improving the stability of connection between the converter 10 and the first optical fiber connector 01.

It may be understood that, in another example, positions of the limiting protrusion 113 and the limiting slot 0124 may also be interchangeable. For example, the limiting slot 0124 may be provided in the channel 10c of the converter 10, and the limiting protrusion 113 may be provided on the outer peripheral surface of the first optical fiber connector 01.

During specific setting, positions, quantities, and specific shapes of the limiting protrusion 113 and the limiting slot 0124 may be properly set according to a practical requirement. Details are not described herein.

In addition, in the example provided in this application, the first abutting surface 0121 is provided at an end of the limiting slot 0124 against the insertion direction (for example, a right end in FIG. 7). The third abutting surface 111 is located on a side of the limiting protrusion 113 facing the first abutting surface 0121. When the limiting protrusion 113 is inserted into the end of the limiting slot 0124, the first abutting surface 0121 abuts against the third abutting surface 111, so that positional limitation can be performed on the converter 10 and the first optical fiber connector 01 to a specific extent in an axial direction.

Certainly, in another example, the first abutting surface 0121 and the third abutting surface 111 may also be located in other positions. Details are not described herein.

In addition, as shown in FIG. 7, a sealing surface 114 is provided in the channel 10c of the converter 10, and a sealing ring 014 is sleeved on the outer peripheral surface of the first optical fiber connector 01. After the converter 10 is inserted into the first optical fiber connector 01, the sealing surface 114 is airtightly attached to the sealing ring 014. In this way, impurities such as water vapor and dust in an external environment can be prevented from entering the channel 10c, and the sealing performance of connection between the converter 10 and the first optical fiber connector 01 can be improved.

Certainly, in another example, two or more sealing rings 014 may be provided. This is not limited in this application.

During a practical application, types of the second optical fiber connectors may be different. Therefore, a structure for connecting the converter 10 to the second optical fiber connector may be designed in a variety of manners.

For example, as shown in FIG. 7, in an example provided in this application, an outer peripheral surface of the cylinder 11 is provided with a slot 115. During a specific application, the converter 10 may be well adapted to a second optical fiber connector having a snap (not shown). In other words, a mechanical connection between the converter 10 and the second optical fiber connector may be achieved by snap-fitting between the snap in the second optical fiber connector and the slot 115.

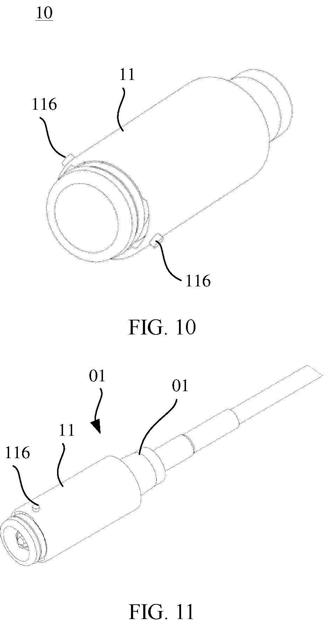

Alternatively, as shown in FIG. 10 and FIG. 11, in another example provided in this application, the outer peripheral surface of the cylinder 11 is provided with positioning columns 116. During a specific application, one end of the converter 10 may be connected to the first optical fiber connector 01, and the other end of the converter 10 may be well adapted to the second optical fiber connector having positioning slots (not shown). In other words, a mechanical connection between the converter 10 and the second optical fiber connector may be implemented by embedding the positioning slot in the second optical fiber connector and the positioning columns 116.

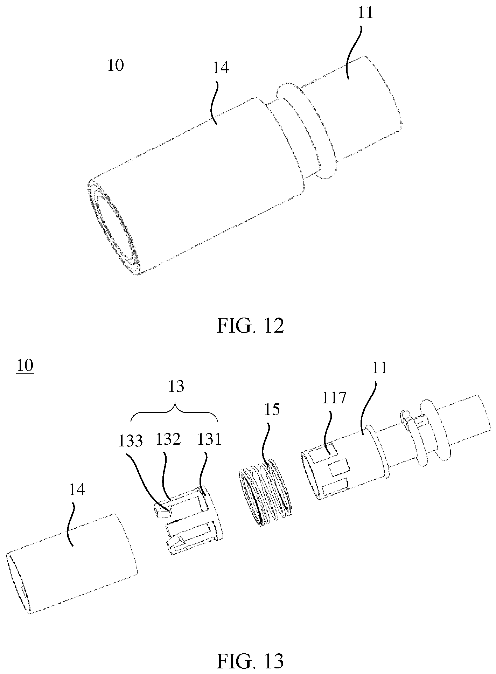

Alternatively, as shown in FIG. 12 to FIG. 14, in another example provided in this application, the converter 10 further includes a second elastic snap 13. During a specific application, the converter 10 may be well adapted to a second optical fiber connector having a slot. In other words, a mechanical connection between the converter 10 and the second optical fiber connector may be achieved by snap-fitting between the slot in the second optical fiber connector and the second elastic snap 13 of the converter 10.

Specifically, as shown in FIG. 13, in an example provided in this application, the second elastic snap 13 includes an annular base 131, elastic arms 132, and hooks 133. The hooks 133 are fixedly connected to the base 131 through the elastic arms 132, to form an overall structure.

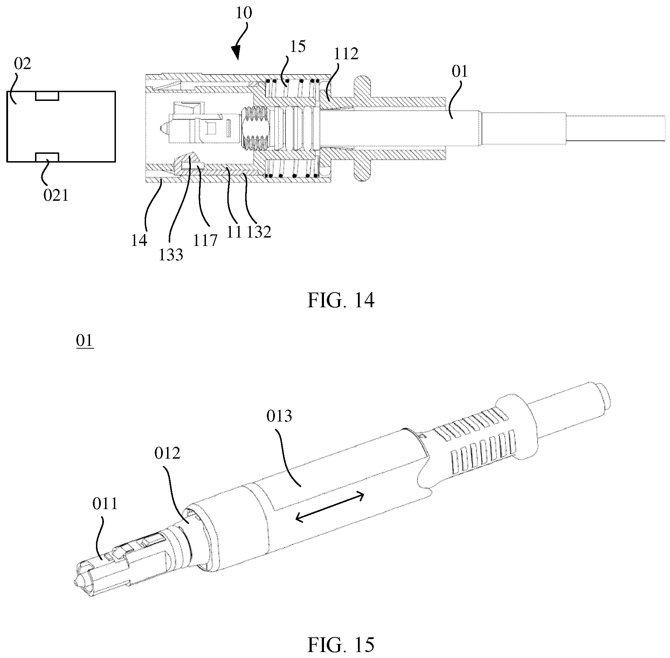

As shown in FIG. 13 and FIG. 14, the base 131 may be sleeved on a periphery of the cylinder 11, and the elastic arms 132 are located between the cylinder 11 and a first sliding sleeve 14. The cylinder 11 has hollow parts 117, and the hooks 133 may extend into the channel 10c of the cylinder by passing through the hollow parts 117, so that the hooks 133 are snap-fitted to a slot 021 of a second optical fiber connector 02.

In addition, the first sliding sleeve 14 is sleeved on the periphery of the cylinder 11 and is capable of sliding relative to the cylinder 11. When the first sliding sleeve 14 is located in a first sliding position, an inner wall of the first sliding sleeve may abut against the elastic arms 132, to prevent the elastic arms 132 from being elastically deformed. In this way, the hooks 133 are snap-fitted to the slot 021, and the converter 10 can be prevented from being detached from the second optical fiber connector 02.

For example, when the converter 10 and the second optical fiber connector 02 are interconnected, the first sliding sleeve 14 may be first slid to a second sliding position, for example, slid rightwards for a distance based on the position shown in FIG. 14. In an interconnection process, when an end of the second optical fiber connector 02 passes through the hooks 133, an abutting force is applied to the hooks 133, so that the hooks 133 drive the elastic arms 132 to be elastically deformed outwards. When the slot 021 is located at a position directly facing the hooks 133, the hooks 133 are inserted into the slot 021, thereby achieving snap-fit connection between the converter 10 and the second optical fiber connector 02.

Finally, the first sliding sleeve 14 is slid to the first sliding position (for example, slide to the position shown in FIG. 14), so that the inner wall of the first sliding sleeve 14 abuts against the elastic arms 132, thereby preventing the elastic arms 132 from being elastically deformed outwards, and ensuring the stability of connection between the converter 10 and the second optical fiber connector 02.

It may be noted that the foregoing preventing the elastic arms 132 from being elastically deformed is not absolute. In other words, there may be a specific gap between the elastic arms 132 and the first sliding sleeve 14, allowing for slight elastic deformation of the elastic arms 132. However, the slight deformation does not cause the hooks 133 to be detached from the slot 021.

In addition, in the example provided in this application, the converter 10 further includes a spring 15, and the spring 15 may be connected to the cylinder 11 and the first sliding sleeve 14. The spring 15 may enable the first sliding sleeve 14 to be located in the first slide position through an elastic force of the spring, so that the stability of connection between the converter 10 and the second optical fiber connector 02 can be improved.

It may be understood that the foregoing first sliding position and the foregoing second sliding position may be two different specific positions, or may be two different range intervals.

It may be understood that, during a practical application, a structure of the converter 10 may be properly set based on a type of the second optical fiber connector 02 that needs to be connected, so that the converter 10 may be adapted to the second optical fiber connector 02 of a corresponding type.

Alternatively, during a specific use, a corresponding converter 10 may be selected based on specific types of the first optical fiber connector 01 and the second optical fiber connector 02, and an effective connection between the first optical fiber connector 01 and the second optical fiber connector 02 may be achieved through the converter 10.

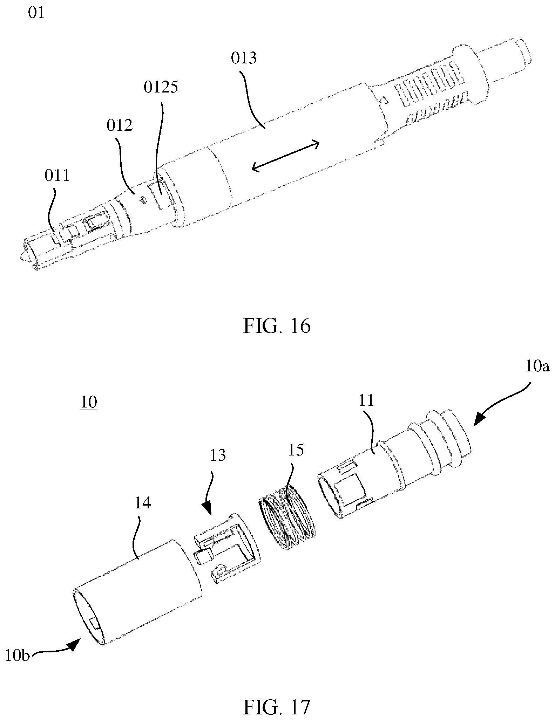

As shown in FIG. 15 and FIG. 16, embodiments of this application further provide another type of first optical fiber connector 01. Specifically, the first optical fiber connector 01 includes an optical fiber ferrule 011 and a housing 012 located on a periphery of the optical fiber ferrule 011, and further includes a second sliding sleeve 013 sleeved on a periphery of the housing 012. An outer peripheral surface of the housing 012 is provided with a second slot 0125. The second sliding sleeve 013 may be slid in an axial direction relative to the housing 012, so that the second slot 0125 may be covered or exposed.

For example, in FIG. 15, the second sliding sleeve 013 is located in a first sliding position, and at this time, the second slot 0125 is covered by the sliding sleeve 013.

In FIG. 16, the second sliding sleeve 013 is located in a second sliding position, and at this time, the second slot 0125 is in an exposed state.

Based on the foregoing first optical fiber connector 01, an embodiment of this application further provides a converter 10 that can be adapted to the first optical fiber connector 01.

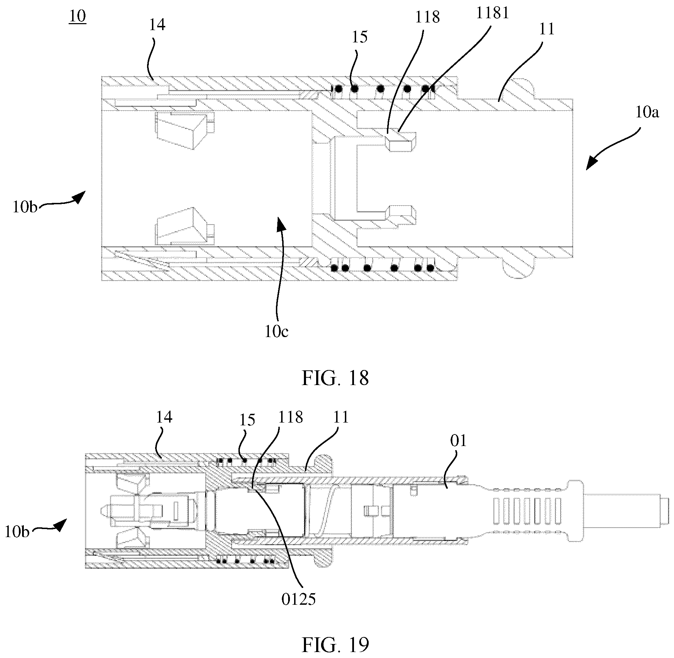

Specifically, as shown in FIG. 17 and FIG. 18, the converter 10 includes a cylinder 11. The cylinder 11 has a first port 10a and a second port 10b. In addition, the cylinder 11 has a channel 10c that runs through the first port 10a and the second port 10b. The first port 10a is configured to be connected to the first optical fiber connector 01, the second port 10b is configured to be connected to a second optical fiber connector (not shown), and the first optical fiber connector 01 and the second optical fiber connector may be interconnected in the channel 10c, thereby achieving optical signal connection between the first optical fiber connector 01 and the second optical fiber connector. A third elastic snap 118 is provided in the cylinder 11. An outer peripheral surface of the first optical fiber connector 01 is provided with a second slot 0125. The third elastic snap 118 is snap-fitted to the second slot 0125. When located in a first sliding position, a second sliding sleeve 013 of the first optical fiber connector 01 is configured to prevent the third elastic snap 118 from being elastically deformed, thereby preventing the third elastic snap 118 from being detached from the second slot 0125. When the second sliding sleeve 013 is located in a second sliding position, the third elastic snap 118 may be elastically deformed, so that the third elastic snap 118 may be allowed to be detached from the second slot 0125.

In addition, as shown in FIG. 18 and FIG. 19, in the example provided in this application, the third elastic snap 118 has limiting steps 1181. After the converter 10 and the first optical fiber connector 01 are interconnected, one end of the second sliding sleeve 013 may abut against the limiting steps 1181, so that the second sliding sleeve 013 may form a good abutting relationship with the third elastic snap 118, so as to prevent the third elastic snap 118 from being elastically deformed.

It may be noted that the foregoing preventing the third elastic snap 118 from being elastically deformed is not absolute. In other words, there may be a specific gap between the third elastic snap 118 and the second sliding sleeve 013, allowing for slight elastic deformation of the third elastic snap 118. However, the slight deformation does not cause the third elastic snap 118 to be detached from the second slot 0125.

In another example, the converter 10 may be further connected to the second sliding sleeve 013 in the first optical fiber connector 01.

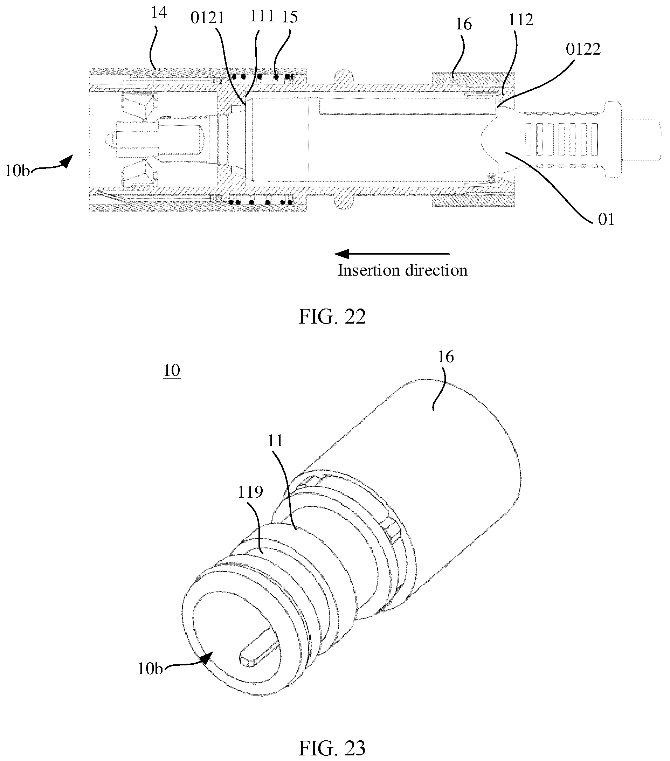

For example, as shown in FIG. 22, in another example provided in this application, a second sliding sleeve 013 of a first optical fiber connector 01 has a first abutting surface 0121 provided in an insertion direction and a second abutting surface 0122 provided against the insertion direction. The cylinder 11 of the converter 10 has a third abutting surface 111 and a first elastic snap 112. The third abutting surface 111 is configured to abut against the first abutting surface 0121, and the first elastic snap 112 is configured to abut against the second abutting surface 0122, to prevent relative displacement between the converter 10 and the first optical fiber connector 01 in the insertion direction, thereby achieving a mechanical connection between the converter 10 and the first optical fiber connector 01.

In addition, the converter 10 further includes a locking ring 16. The locking ring 16 may be movably sleeved on a periphery of the cylinder 11, and is configured to prevent the first elastic snap 112 from being elastically deformed.

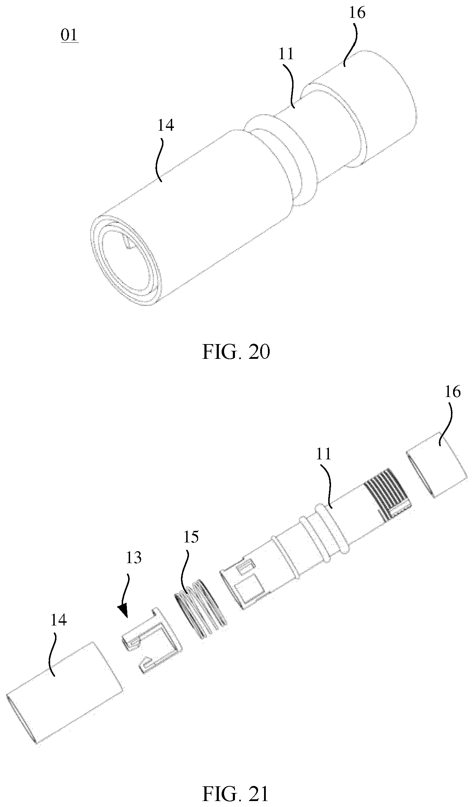

Specifically, refer to FIG. 20 to FIG. 22. An outer peripheral surface of the cylinder 11 is provided with an outer thread. An inner wall of the locking ring 16 is provided with an inner thread. The locking ring 16 is connected to the cylinder 11 by threads. In this way, the first elastic snap 112 can be prevented from being elastically deformed, and thus, the stability of connection between the converter 10 and the first optical fiber connector 01 can be improved.

It may be understood that, in another example, the locking ring 16 and the cylinder 11 may also be assembled in an interference fit manner. Alternatively, the locking ring 16 may be connected to the cylinder 11 in a manner of snap-fitting, bonding, or the like. Details are not described herein.

In addition, in the example shown in FIG. 21, to achieve connection between the converter 10 and a second optical fiber connector, the converter 10 further includes a second elastic snap 13, a spring 15, and a first sliding sleeve 14. Structures and working principles of the second elastic snap 13, the spring 15, and the first sliding sleeve 14 shown in FIG. 21 are basically the same as those shown in FIG. 17. Details are not described herein again.

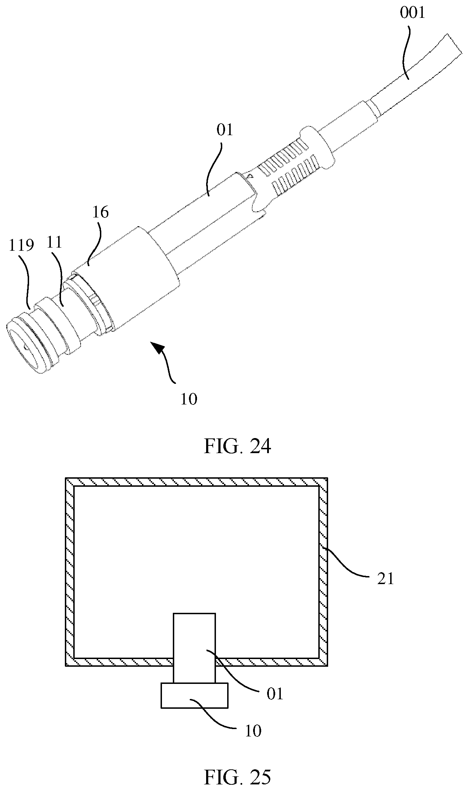

In addition, as shown in FIG. 23 and FIG. 24, in an example provided in this application, an outer peripheral surface of the cylinder 11 is provided with a slot 119. During a specific application, the converter 10 may be well adapted to a second optical fiber connector having a snap (not shown). In other words, a mechanical connection between the converter 10 and the second optical fiber connector may be achieved by snap-fitting between the snap in the second optical fiber connector and the slot 119.

During a specific application, the converter 10 may be mounted at one end of a first optical fiber connector 01 when in use, so that the converter 10 is connected to another type of second optical fiber connector.

For example, as shown in FIG. 24, a cable assembly provided in an embodiment of this application includes an optical fiber assembly and the foregoing converter 10. Specifically, the optical fiber assembly includes an optical fiber 001 and the first optical fiber connector 01. The first optical fiber connector 01 is mounted at one end of the optical fiber 001, thereby achieving connection between the optical fiber 001 and a communication device. During a practical application, a corresponding converter 10 may be selected based on specific types of the first optical fiber connector 01 and another optical fiber connector or interface. In this way, adaptability between the first optical fiber connector 01 and the another optical fiber connector or interfaces can be ensured, and the first optical fiber connector 01 can be used in more scenarios.

It may be understood that the converter 10 may also be applied to a communication device, to increase use scenarios of an interface in the communication device.

For example, as shown in FIG. 25, a fiber management tray provided in an embodiment of this application includes a tray body 21, a first optical fiber connector 01, and the foregoing converter 10. Specifically, the first optical fiber connector 01 is fixedly connected to the tray body 21. During a practical application, a corresponding converter 10 may be selected based on specific types of the first optical fiber connector 01 and another optical fiber connector or interface. In this way, adaptability between the first optical fiber connector 01 and the another optical fiber connector or interface can be ensured, and the fiber management tray can be used in more scenarios. The fiber management tray may include one first optical fiber connector 01, or may include two or more first optical fiber connectors 01. This is not limited in this application.

Certainly, in another example, the converter 10 may be further applied to another scenario. A specific application scenario of the converter 10 is not limited in this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A converter (10), comprising a cylinder (11), wherein the cylinder (11) has a first port (10a) and a second port (10b);
the cylinder (11) has a channel (10c) that runs through the first port (10a) and the second port (10b), wherein
the first port (10a) is configured to be connected to a first optical fiber connector (01), and the second port (10b) is configured to be connected to a second optical fiber connector (02); and
the cylinder (11) has a third abutting surface (111) and a first elastic snap (112), wherein
the third abutting surface (111) is configured to abut against a first abutting surface (0121) of the first optical fiber connector (01), and the first elastic snap (112) is configured to abut against a second abutting surface (0122) of the first optical fiber connector (01).

2. The converter (10) according to claim 1, wherein a limiting protrusion (113) is provided in the channel (10c); and
the limiting protrusion (113) is configured to be inserted into a limiting slot (0124) located on an outer peripheral surface of the first optical fiber connector (01).

3. The converter (10) according to claim 1 or 2, wherein a sealing surface (114) is provided in the channel (10c), and the sealing surface (114) is configured to be airtightly attached to a sealing ring (014) on the outer peripheral surface of the first optical fiber connector (01).

4. The converter (10) according to any one of claims 1 to 3, wherein the converter (10) further comprises a locking ring (12); and
the locking ring (12) may be movably sleeved on a periphery of the cylinder (11).

5. The converter (10) according to claim 4, wherein the outer peripheral surface of the cylinder (11) is provided with an outer thread, an inner wall of the locking ring (12) is provided with an inner thread, and the locking ring (12) is connected to the cylinder (11) by threads.

6. The converter (10) according to any one of claims 1 to 5, wherein the converter (10) is provided with a second elastic snap (13), and the second elastic snap is (13) configured to be snap-fitted to a first slot (021) on an outer peripheral surface of the second optical fiber connector (02).

7. The converter (10) according to claim 6, wherein the converter (10) further comprises a first sliding sleeve (14), and the first sliding sleeve (14) is sleeved on the periphery of the cylinder (11) and is capable of sliding relative to the cylinder (11).

8. The converter (10) according to claim 7, wherein when located in a first sliding position, the first sliding sleeve (14) is configured to prevent the second elastic snap (13) from being elastically deformed; and
when the first sliding sleeve (14) is located in a second sliding position, the second elastic snap (13) is elastically deformed.

9. The converter (10) according to claim 8, wherein the converter (10) further comprises a spring (15), and the spring (15) is connected to the first sliding sleeve (14) and the cylinder (11), and the spring (15) is configured to enable the first sliding sleeve (14) to slide to the first sliding position.

10. The converter (10) according to any one of claims 1 to 9, wherein a periphery of the cylinder (11) is provided with positioning columns (116), and the positioning columns (116) are configured to be inserted into positioning slots of the second optical fiber connector (02).

11. A converter (10), comprising a cylinder (11), wherein the cylinder (11) has a first port (10a) and a second port (10b);
the cylinder (11) has a channel (10c) that runs through the first port (10a) and the second port (10b), wherein
the first port (10a) is configured to be connected to a first optical fiber connector (01), and the second port (10b) is configured to be connected to a second optical fiber connector (02); and
the cylinder (11) is provided with a third elastic snap (118), wherein the third elastic snap (118) is configured to be snap-fitted to a second slot (0125) on an outer peripheral surface of the first optical fiber connector (01);
the first optical fiber connector (01) is provided with a second sliding sleeve (013), and when located in a first sliding position, the second sliding sleeve (013) is configured to prevent the third elastic snap (118) from being elastically deformed; and
when the second sliding sleeve (013) is located in a second sliding position, the third elastic snap (118) is elastically deformed.

12. The converter (10) according to claim 11, wherein a sealing surface (113) is provided in the channel (10c); and
the sealing surface (114) is configured to be airtightly attached to a sealing ring (014) on the outer peripheral surface of the first optical fiber connector (01).

13. The converter (10) according to claim 11 or 12, wherein the converter (10) is provided with a second elastic snap (13), and the second elastic snap (13) is configured to be snap-fitted to a first slot (021) on an outer peripheral surface of the second optical fiber connector (02).

14. The converter (10) according to claim 13, wherein the converter (10) further comprises a first sliding sleeve (14), and the first sliding sleeve (14) is sleeved on the periphery of the cylinder (11) and is capable of sliding relative to the cylinder (11).

15. The converter (10) according to claim 14, wherein when located in a first sliding position, the first sliding sleeve (14) is configured to prevent the second elastic snap (13) from being elastically deformed; and
when the first sliding sleeve (14) is located in a second sliding position, the second elastic snap (13) may be elastically deformed.

16. The converter (10) according to claim 15, wherein the converter (10) further comprises a spring (15), and the spring (15) is connected to the first sliding sleeve (14) and the cylinder (11), and the spring (15) is configured to enable the first sliding sleeve (14) to slide to the first sliding position.

17. A cable assembly, comprising an optical fiber assembly, and the converter (10) according to any one of claims 1 to 16, wherein the optical fiber assembly comprises an optical fiber (001) and a first optical fiber connector (01) provided at one end of the optical fiber (001), and the first port (10a) is connected to the first optical fiber connector (01).

18. A fiber management tray, comprising a tray body, a first optical fiber connector (01), and the converter (10) according to any one of claims 1 to 16, wherein the first optical fiber connector (01) is fixed to the tray body, and the first port (10a) of the converter (10) is connected to the first optical fiber connector (01).
